(19) Europäisches Patentamt
European Patent Office
Office européen des brevets

(11) **EP 2 178 180 A1**

(12) **EUROPEAN PATENT APPLICATION**

(43) Date of publication:
**21.04.2010 Bulletin 2010/16**

(51) Int Cl.:
*H01S 3/00* (2006.01)      *H01S 3/106* (2006.01)
*H01S 3/08* (2006.01)      *H01S 3/11* (2006.01)

(21) Application number: **08462009.5**

(22) Date of filing: **16.10.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Szegedi Tudomanyegyetem
6720 Szeged (HU)**

(72) Inventors:
• **Görbe, Mihály
6000 Kecskemét (HU)**
• **Osvay, Károly
6725 Szeged (HU)**

(74) Representative: **Szabo, Zsolt
Danubia
Patent & Law Office LLC
Bajcsy-Zsilinszky út 16
1051 Budapest (HU)**

(54) **Optical assembly for tuning the carrier-envelope phase of laser pulses**

(57)      The present invention relates to a compact optical assembly that is capable for tuning the carrier-envelope phase of a laser pulse in a pure optical manner in such a way that neither the first and higher order chirp of the pulse (hence the pulse propagation time, pulse duration, etc.) nor the properties of the laser beam (e.g. pointing, angular dispersion) of said laser pulses vary during said tuning. Said assembly can be arranged optionally within or outside of the laser resonator emitting the laser pulses.

The orientation ($\alpha_i$) and the apex angle ($\phi_i$) of wedges ($P_i$) is chosen to minimize chirp of the laser pulses.

Figure 2

**Description**

***Field of the Invention***

The invention relates to an optical assembly for tuning the carrier-envelope phase and hence the carrier-envelope offset phase of subsequent laser pulses. In particular, the subject-matter of the present invention is a compact optical assembly that is capable for tuning the carrier-envelope phase of a laser pulse in a pure optical manner in such a way that neither the first and higher order chirp of the pulse (hence the pulse propagation time, pulse duration, etc.) nor the properties of the laser beam (e.g. pointing, angular dispersion) of said laser pulses vary during said tuning.

Said assembly can be arranged within or outside of a laser resonator (i.e. intracavity or extracavity mode, respectively). In the first case the so-called carrier envelope offset (CEO) phase is varied, while in the second case, the carrier envelope phase (CEP) is to be tuned. Since the primary effect is the change of carrier envelope phase of a pulse, from now on the term "tuning of CEP" will refer to the tuning and/or adjustment of the CEO phase as well.

***Background of the Invention***

In most of the femtosecond-pulse experiments (for instance at high harmonic generation, attosecond pulse generation, optical frequency metrology, optical clocks, coherent control experiments, etc.) it is essential to have laser pulses with well defined carrier-envelope phase.

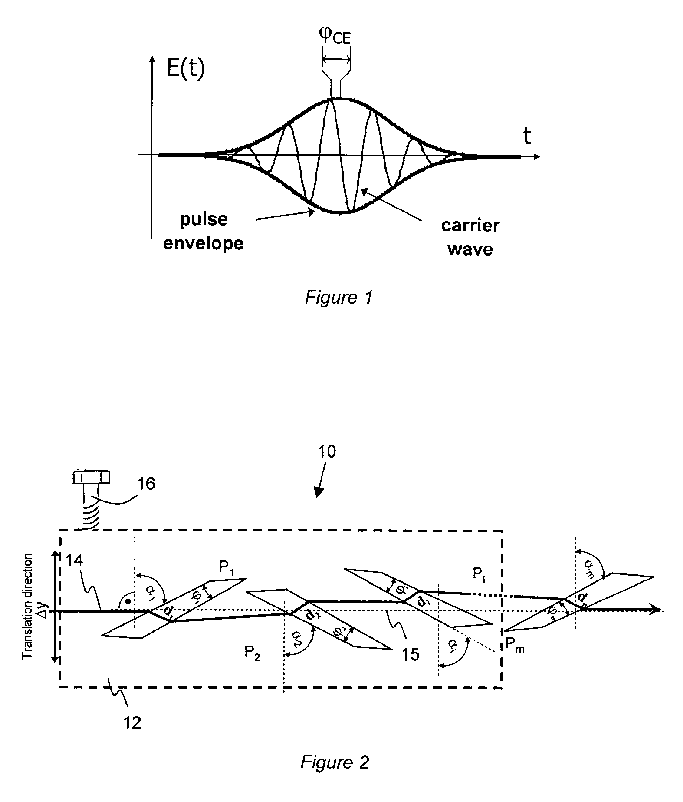

By definition, the CEP ($\varphi_{CE}$) - illustrated in Figure 1 - gives the extent to which the phase of the carrier wave is ahead of the peak of the envelope when a laser pulse is treated as a wave packet. As it is well-known, the CEP in a train of laser pulses generated by a given laser source varies (or slips) from pulse to pulse, as a consequence of which a so-called CEP-drift or carrier-envelope offset phase (CEO phase) arises along the pulse train, between e.g. two consecutive laser pulses. In free running, that is, for not stabilized laser oscillators, the CEO phase itself varies on a timescale of a tens of microseconds.

Basically, the CEP of femtosecond laser oscillators can be aligned in two steps: first the CEO phase is stabilized, that is, the pulse-to-pulse variation of CEP is kept at a well-defined value. This can be usually achieved by using a so-called "*f*-to-2*f*" interferometer and an active feedback loop to the pump laser. As the second step, the CEO phase is set to $2\pi/n$, wherein n is a positive integer. Consequently, all the $n^{th}$ pulses leaving the oscillator will have the same absolute CEP value. In the literature, lasers fulfilling this latter requirement are referred to as CEP-stabilized (or phase-stabilized) lasers. If the absolute CEP is also to be set, the phase of the already CEP-locked pulse train is varied outside of the laser oscillator by changing the optical path length in a dispersive material.

The most common technical solution of the above stabilization process is discussed in detail e.g. by the paper of M.G. Schätzel et al. (see Appl. Phys. B79, pp. 1021-1025, (2004)). Here, two pairs of optical wedges are used. One of the pairs, preferentially arranged inside of the laser oscillator, is for setting the CEO phase to the value of $2\pi/n$. The other pair, placed into the beam path of the pulses leaving the oscillator, is for adjusting the absolute CEP to a required value. Individual wedges of the pairs are set counter-parallel to each other and are of the same material (e.g. fused silica) and geometry (identical apex angles), at least in pairs. The stabilization itself is based upon a careful dispersion compensation achieved by tuning the amount of wedge material in the beam path through pushing into or pulling out of said beam path one of the wedges of the first wedge pair. Furthermore, the value of the absolute CEP is changed by varying the position of one of the wedges of the second wedge pair relative to the beam path by means of a(n) (e.g. piezo-driven) precision translator.

A drawback of this solution is that the use of a pair of identical optical wedges changes not only the CEP of the laser pulses generated, but also the transit time and net group velocity dispersion (see below) when they propagate through the wedge pairs. Hence, when tuning the CEP, due to the material dependent but constant group velocity (GV) along with varying amounts of material in the beam path, the transit time of the laser pulses also changes. In the case of intracavity applications this induces a change in the repetition rate of the laser oscillator and hence makes the above method useless in the field of frequency metrology as a CEO phase adjusting process. In the case of extracavity applications, when e.g. the absolute value of the CEP is to be set, this leads to a change in timing between a pulse concerned and the rest of the experimental setup (typically in high resolution pump-probe experiments) that should be avoided especially in experiments making use of attosecond laser pulses.

Furthermore, when tuning CEP, as a consequence of the material dependent but constant group velocity dispersion (GVD) along with varying amounts of material in the beam path, the duration of the pulses emitted will also change. Consequently, when CEP-stabilized lasers are to be used, the peak power of a pulse train reaching a target might vary at the surface of said target which is disadvantageous and hence should also be avoided.

The change of repetition rate of the oscillator could be eliminated e.g. by the application of an active feedback loop that, depending on the type of the oscillator, controls either the power of the pumping laser or one of the intracavity mirrors, as is generally done. To precisely fix the repetition rate (or the resonator length) of a pulsed laser, a solution is suggested by MenloSystems GmbH (Munich, Germany), wherein said repetition rate is synchronized to an external radio frequency clock or to a high-precision optical reference (i.e. quartz) clock (further details can be found at www.menlosystems.com).

For the synchronization, at least one electronic circuit with a finite response time (which is about 1 to 10 $\mu$s) is used. This means that said process is limited in time, i.e. not all the consecutive pulses emitted are measured and hence the control is not fast enough. Moreover, the accomplishment of the process requires the application of a complicated and rather expensive electronic circuit.

To eliminate the changes in pulse duration arising when CEP tuning takes place, International Publication Pamphlet No. WO 2007/070428 A1, which is considered to be the most relevant state of the art, discloses a composite structure comprised of a pair of plates having sloped surfaces and mounted for displacement such that the ratio of the thicknesses of the two plates through which the laser pulses will pass can be varied by displacing the plates in the propagation path of the pulses. The two optically lossless plates are made of materials having similar refractive indices and exhibiting similar GVD for the laser pulse passing through. However, the ratios of the phase and group velocities of the laser pulse substantially differ in the two plates. The plates are aligned such that the thinner portion of one plate is aligned with the thicker portion of the other one, and vice versa. Furthermore, said plates are either glued together to form a single composite plate or arranged spaced apart. In either case, the two outermost surfaces are parallel to one another. By changing the ratio of thicknesses in the beam path, the offset of the carrier-wave with respect to the envelope can be changed while keeping the net quadratic dispersion substantially constant and, hence, producing no change in the laser pulse duration.

While the above discussed composite structure of the two plates keeps quadratic dispersion practically constant during transmission and, therefore, induces no change in the duration of laser pulses, it is inherently angularly dispersive. This means that the transmitted laser beam is provided with a certain amount of angular dispersion, the extent of which is equal to the difference of the opposite-sense angular dispersions exhibited by each individual plate. Furthermore, due to the angularly dispersive behaviour of the composite structure concerned, the shape of the laser pulses leaving said composite structure will be distorted in time, i.e. a so-called pulse front tilting appears that adversely influences the pulses and, hence, should be compensated for. International Publication Pamphlet No. WO 2007/070428 A1 does not address this problem; neither a technical solution nor even a hint to the problem of angular dispersion is discussed thereby.

***Disclosure of the Invention***

As is well-known, the spectral phase $\varphi(\omega)$ of an optical (i.e. laser) pulse traversing an optical system can be given by the equation of

$$\varphi(\omega) = \varphi_{CE} + GD \cdot (\omega - \omega_0) + \frac{1}{2} GDD \cdot (\omega - \omega_0)^2 + \frac{1}{6} TOD \cdot (\omega - \omega_0)^3 + ... \qquad (1)$$

wherein $\varphi CE = \varphi(\omega_0)$ is the CEP and

$$GD = \frac{d\varphi(\omega)}{d\omega}\bigg|_{\omega=\omega_0} , \ GDD = \frac{d^2\varphi(\omega)}{d\omega^2}\bigg|_{\omega=\omega_0} \quad \text{and} \quad TOD = \frac{d^3\varphi(\omega)}{d\omega^3}\bigg|_{\omega=\omega_0}$$

are the group delay (GD), the group delay dispersion (GDD) and the third order dispersion (TOD), respectively. Higher order terms of the dispersion series are also included in the present analysis, but for the sake of simplicity, they are not actually displayed in the followings.

When a light beam traverses an optical system, its direction angle of propagation $\varepsilon$ can change. If said light beam comprises more than one components, as is the case when e.g. short and, hence, broadband laser pulses are considered, every spectral component can have its own direction angle of propagation $\varepsilon(\omega)$ that can be expressed as

$$\varepsilon(\omega) = \varepsilon_0 + \varepsilon' \cdot (\omega - \omega_0) + \frac{1}{2} \varepsilon'' \cdot (\omega - \omega_0)^2 + \frac{1}{6} \varepsilon''' \cdot (\omega - \omega_0)^3 + ... \qquad (2)$$

wherein $\varepsilon_0 = \varepsilon(\omega_0)$ is the direction angle of propagation of the component with the central frequency, and

$$\varepsilon'(\omega) = \frac{d\varepsilon(\omega)}{d\omega}\bigg|_{\omega=\omega_0} \quad , \quad \varepsilon''(\omega) = \frac{d^2\varepsilon(\omega)}{d\omega^2}\bigg|_{\omega=\omega_0} \quad \text{and} \quad \varepsilon'''(\omega) = \frac{d^3\varepsilon(\omega)}{d\omega^3}\bigg|_{\omega=\omega_0} \tag{3}$$

are the first order, second order and third order angular dispersions, respectively. Again, for the sake of simplicity, here the terms representing higher order angular dispersions are not indicated. Every pulse propagating through an optical system is uniquely characterized by the spectral phase $\varphi(\omega)$ and the direction angle of propagation $\varepsilon(\omega)$.

A laser beam propagates with no angular dispersion if the above (and further higher) derivatives of $\varepsilon(\omega)$ are all zero. For distortionless propagation, however, it is practically enough to eliminate only the first few orders of angular dispersion.

In general, the CEP tuning of a laser pulse should be accomplished in such a way that (i) no change with respect to the GD (and hence in the repetition rate of the oscillator) and simultaneously (ii) no change with respect to the GDD and to the higher order terms (and hence in the pulse duration) take place, as well as (iii) no angular dispersion appears (that is, every derivative in Eq. (3) is zero). Moreover, it is also preferred that (iv) no change in beam direction shall appear along with the CEP tuning of a laser pulse (that is, $\varepsilon_0=0$).

It is therefore a broad object of the current invention to present a generalized approach of CEP tuning, wherein a control of CEP takes place with the simultaneous compensation for the change of dispersion of the assemby upon the said contr$_{[o1]}$ol, and preferably up to an arbitrary desired order. In particular, the object of the present invention is to provide means for a pure optical elimination of all sorts of change in dispersion of a laser beam induced upon the CEP tuning of the constituent laser pulses, that is, with the application of no supplemental electronical means, such as e.g. the above discussed feedback circuits applied for keeping the resonator length constant.

Another object of the present invention is to provide a separate optical assembly by means of which the CEP of a laser pulse train can be tuned or even strictly controlled such that changes neither in the properties of the laser pulses (i.e. the pulse propagation time, pulse duration, etc.) nor in the propagation properties thereof (i.e. pointing, angular dispersion) along their path of propagation arise.

Another object of the invention is to accomplish an optical assembly that, due to its relative compactness and simplicity, can easily be arranged either within the laser resonator of a pulsed laser or outside of the resonator, i.e. in the beam path of the laser pulse trains that already had left said resonator.

A further object of the invention is to provide a method for constructing the optical assembly according to the present invention in such a way that the physical properties of a laser pulse train (i.e. the material dispersion in accordance with Eq. (1) above) and the angle of propagation (in accordance with Eq. (2) above) could be maintained to an arbitrary desired order upon tuning the CEP.

A yet further object of the invention is to provide a suitable method for tuning the CEP of a laser pulse train while keeping the properties of the laser pulses and their propagation properties simultaneously unchanged.

As will be discussed below in detail, the above objects can be achieved by constructing an optical assembly comprised of a plurality of transparent wedges aligned basically in a reversed position relative to each other, wherein the total number of wedges corresponds to the desired order of compensation, said wedges of preferably, but not necessarily different refractive indices being formed with given apex angles and arranged at given angles relative to the direction of propagation of the laser pulses (that is, they can be rotated around suitably chosen geometrical axes relative to each other) subjected to CEP tuning and by appropriately displacing said optical assembly, as a whole or a part thereof, in a direction essentially perpendicular to the propagation path of said pulses.

Accordingly, in a first aspect of the invention an optical assembly for tuning the CEP of a laser pulse train is provided in accordance with Claim 1. Possible further preferred embodiments of the inventive assembly are set forth in Claims 2 to 6.

### Brief Description of the Drawings

The invention will now be described in relation to certain preferred embodiments with reference to the following illustrative figures, so that it may be more fully understood.

With specific reference to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention. The description taken with the drawings making apparent to those skilled in the art how the several forms of the invention may be embodied in practice. In the drawings, identical reference signals refer to identical or similar elements.

Figure 1 illustrates the carrier-envelope phase (CEP) for a single laser pulse.

Figure 2 is a schematic plan view illustrating the most general embodiment of the optical assembly (so-called m-wedge) used for the CEP tuning according to the present invention.

Figure 3A shows diagramatically a 2-wedge embodiment of the optical assembly according to the present invention in a plan view.

Figure 3B is a schematic perspective view (without explicitly showing the laser beam) of the 2-wedge optical assembly of Figure 3A.

Figure 4 represents the change in the spectral group delay of a laser pulse passing through various CEP adjustment devices, when varying the CEP by $2\pi$.

Figure 5 is a schematic plan view illustrating a 3-wedge optical assembly for compensating the change of dispersion up to the third order.

Figure 6 is a schematic plan view of a further possible embodiment of the optical assembly according to the invention that consists of two pairs of wedges (a 4-wedge embodiment), wherein one of the wedges of each pair are displaced together as being mounted to a common base plate.

***Detailed Description of Preferred Embodiments***

Referring to Fig. 2, the most general embodiment, a so-called m-wedge embodiment of the inventive optical assembly 10 used for the CEP tuning with a compensation for the change of dispersion up to a desired order is illustrated. Said optical assembly 10 comprises basically a common base plate 12 and m pieces (m is a positive integer number) of transparent optical elements. Here, transparency is understood in a wavelength range around the central wavelength of a laser pulse beam 14 of laser pulses to be subjected to CEP tuning, wherein said laser pulses are generated by a laser oscillator (not shown). In particular, said optical elements are provided by wedges $P_1$, ..., $P_m$ each having first and second sloped surfaces in the propagation path 15 of the laser beam 14 with apex angles of $\varphi_1$, ..., $\varphi_m$, respectively. Each of said wedges $P_1$, ..., $P_m$ is rotatable around an axis (not shown) that is parallel to the apex of the respective wedge and perpendicular to the plane of the common blase plate 12. Furthermore, each of said wedges $P_1$, ..., $P_m$ is made of a material with a refractive index of $n_1$, ..., $n_m$, respectively, wherein said refractive indices preferably, but not necessarily differ from one another. Moreover, said wedges $P_1$, ..., $P_m$ are all arranged in said propagation path 15 at respective angles of incidence $\alpha_1$, ..., $\alpha_m$, respectively, in such a way that said laser beam 14 passes through said first and second sloped surfaces of the wedges $P_1$, ..., $P_m$ (in this order). In this manner, when the laser beam 14 propagates along its path 15 within the assembly 10, it travels over distances $d_1$, ..., $d_m$ between said first and second surfaces within the refractive materials of the subsequent wedges $P_1$, ..., $P_m$, respectively.

When the laser beam 14 travels through a certain wedge $P_k$ ($1 \leq k \leq i$, k and *i* are positive integers, and i<m also holds, m is a positive integer) the GD, GDD, TOD, etc. (and hence the CEP) of the pulses within the laser beam 14 are changed. By varying the distance $d_k$ travelled within the respective wedge $P_k$, said values of the GD, GDD, TOD, etc. will change as well. By displacing said wedge $P_k$ in a direction perpendicular to the propagation path 15 (i.e. by increasing/decreasing the amount of the k-th wedge material within the propagation path 15), said distance $d_k$ is changed by $\Delta d_k$. In the case of shifting the wedges $P_1$, ..., $P_i$ together, that is as a single unit, when said laser beam 14 travels through further wedges $P_{i+1}$, ..., $P_m$, the CEO phase and also the GD, GDD, TOD, etc. increase by amounts determined by the paths $d_{i+1}$, ..., $d_m$. Since these extra paths are constant in the sense that they are independent of the change of position of said unit comprised of the wedges $P_1$, ..., $P_i$, they do not have an affect on the process of CEO phase tuning. However, any deviation from the direction of the laser beam including angular dispersion (see Eq. (3)), that is induced by said unit, are to be compensated for by an appropriate choice of orientation of the remaining wedges $P_{i+1}$, ..., $P_m$. If now the laser beam 14 runs through a series of wedges, by carefully adjusting the distances $\Delta d_1$, ..., $\Delta d_i$ travelled within each of said wedges causing various changes in the GD, GDD, TOD, etc., it can be achieved that the net changes in the GD, GDD, TOD and higher order terms are all zero, that is, the opposite sense GD-, GDD-, TOD-, etc. effects of the consecutive wedges are compensating for one another, but eventually the CEP is changed by an amount that depends on $\Delta d_1$, ..., $\Delta d_i$.

Hence, to tune the CEP along with compensating for the introduced dispersion up to a desired order, according to the present invention some wedges $P_1$, ..., $P_i$ located adjacent to each other are rotatably mounted onto the base plate 12, by means of which a collective displacement (represented by a double arrow $\Delta y$ in Fig. 2.) of said wedges $P_1$, ..., $P_i$ relative to the remaining wedges $P_{i+1}$, ..., $P_m$ in a direction perpendicular to the propagation path 15 of the laser beam 14 becomes possible. The base plate 12 with the wedges $P_1$, ..., $P_i$ forms a compact unit that can be arranged in the propagation path of the light beam 14 either inside or outside of a laser resonator for effecting said CEP tuning in the desired manner. As is known by a skilled person, the collective displacement can be accomplished by any appropriate displacing mechanism 16. Said displacing mechanism 16 can be provided in the form of e.g. a simple micrometer screw (set manually) or a stepping motor (under proper control) or a precision piezo translator, appropriately coupled to the base plate 12.

In practice, for achieving said compensation up to a desired order, the parameters characterizing the individual optical elements of the optical assembly 10, i.e. the apex angles $\varphi_1$, ..., $\varphi_m$, the angles of incidence $\alpha_1$, ..., $\alpha_m$, and the material properties, i.e. the refractive indices $n_1$, ..., $n_m$ of the wedges $P_1$, ..., $P_m$ must be determined with a view to items (i) to (iv) defined earlier and rewritten below in the form of a set of equations to be "solved" with the starting relation of $\Delta\varphi_{CEO} = \Delta\varphi_{CEO}(\Delta y) \neq 0$ (i.e. the CEP changes when the base plate 12 is displaced in the direction perpendicular to the propagation path 15 of the laser beam 14 by the amount of $\Delta y$), that is

(I) $GD(\Delta y)=0$ (i.e. the transit time does not change upon displacing said base plate 12 in the direction perpendicular to the propagation path 15 of the laser beam 14 by the amount of $\Delta y$, which results in an $\Delta y$-independent repetition rate of the oscillator upon intracavity application);

(II) $GDD(\Delta y)=0$, and also the higher order dispersion terms up to the desired order are zero (i.e. the temporal shape of the pulse, including the pulse duration, remains unchanged upon displacing said base plate 12 with wedges $P_1$, ..., $P_i$ by the amount of $\Delta y$ in a direction perpendicular to the propagation path 15 of the laser beam 14);

(III) $\varepsilon^{(j)}(\alpha_1,...,\alpha_m,\varphi_1,...,\varphi_m)=0$ (i.e. no angular dispersion is present up to the m-th order; here j = 1, ... , m-1 and $\varepsilon^{(j)}$ stands for the *j*-th derivative (see Eq. (3));); and additionally

(IV) $\varepsilon_0(\alpha_1,...,\alpha_m,\varphi_1,...,\varphi_m)=0$ (i.e. no change in the beam direction arises).

In principle, from this set of equations the angles of incidence $\alpha_1$, ..., $\alpha_m$ and the apex angles $\varphi_1$, ..., $\varphi_m$ of the wedges $P_1$, ..., $P_m$ to be used can be determined. As is clear, to unambiguously characterize the orientation of wedges $P_1$, ..., $P_m$, instead of the angles of incidence $\alpha_1$, ..., $\alpha_m$, for example the angle of incidence $\alpha_1$ of the first wedge $P_1$ and the angles of the second sloped surface of a given wedge $P_i$ and the first sloped surface of the subsequent wedge $P_{i+1}$ (here $1 \leq i \leq m-1$) can be equally used. However, as the material dispersions are not of arbitrary values and are implicitly also present in (I) and (II) through the refractive indices $n_1$, ..., $n_m$ of wedges $P_1$, ..., $P_m$, solutions should only be looked for existing materials available in practice, as said materials have to be used when the wedges $P_1$, ..., $P_m$ are actually manufactured. These are the so-called physical solutions of the set of equations concerned. In order to obtain physical solutions, various databases and/or catalogues including a plurality of optical materials, preferably glasses that can be used here, should be checked carefully. In general, suitable glasses are those that have similar values of GD, GDD, TOD, etc., preferably exhibit different, but relatively low refractive indices making them ideal for short (i.e. femtosecond) pulsed applications, and preferably exhibit large Abbe numbers.

The resolution of the above set of equations is made even more difficult by the fact that only those solutions are suitable that lead to wedges $P_1$, ..., $P_m$ that can be manufactured, i.e. the resulting apex angles $\varphi_1$, ..., $\varphi_m$ of which are neither too large nor too small, or the values of GD, GDD, TOD, etc. caused by said wedges $P_1$, ..., $P_m$ are not too high either.

The present optical assembly 10 comprising a base plate 12 with *i* pieces of wedges $P_1$, ..., $P_i$ mounted thereon and hence being shifted together is suitable for compensating the spectral phase dispersion according to Eq. (1) up to the *i*-th order along with inducing a change in the CEP of the laser pulses passing therethrough. Or putting this another way, by means of said optical assembly 10, the first (*i*-1) derivatives in Eq. (1) can be compensated for along with accomplishing the desired change in the CEP of the laser pulses.

Furthermore, the present optical assembly 10 comprising altogether m pieces of wedges $P_1$, ..., $P_m$ is suitable for the CEP tuning of the laser pulses passing therethrough with a simultaneous compensation for the change of dispersion (including the angular dispesion as well) up to the m-th order.

Furthermore, the optical assembly 10 of Figure 2 provides a transmitted laser beam 14 exiting parallel to the laser beam 14 incident onto the assembly 10, that is, no lateral deviation of the laser beam 14 takes place when travelling through the assembly 10 (i.e. $\varepsilon_0=0$). Moreover, neither a lateral shift of the transmitted laser beam 14 relative to the incident laser beam 14 appears. This latter is due to the special arrangement of the wedges $P_1$, ..., $P_m$ along the propagation path 15; they are oriented in such a way that for any two adjacent wedges the angle between the second sloped surface of one wedge of said pair and the first sloped surface of the other wedge of said pair (that is, the relative angle of the two adjacent wedges) can equally form an acute angle or an obtuse angle along the propagation path 15. If, however, all of said relative angles along the propagation path 15 are either acute angles or obtuse angles, said optical assembly 10 results in a laser beam 14 shifted in the lateral direction relative to the incident laser beam 14. This means that by orienting said wedges $P_1$, ..., $P_m$ along the propagation path 15 differently, i.e. in a way wherein the relative angles can fall into the full range of 0° and 180°, the lateral shift of the transmitted laser beam can be decreased or even eliminated.

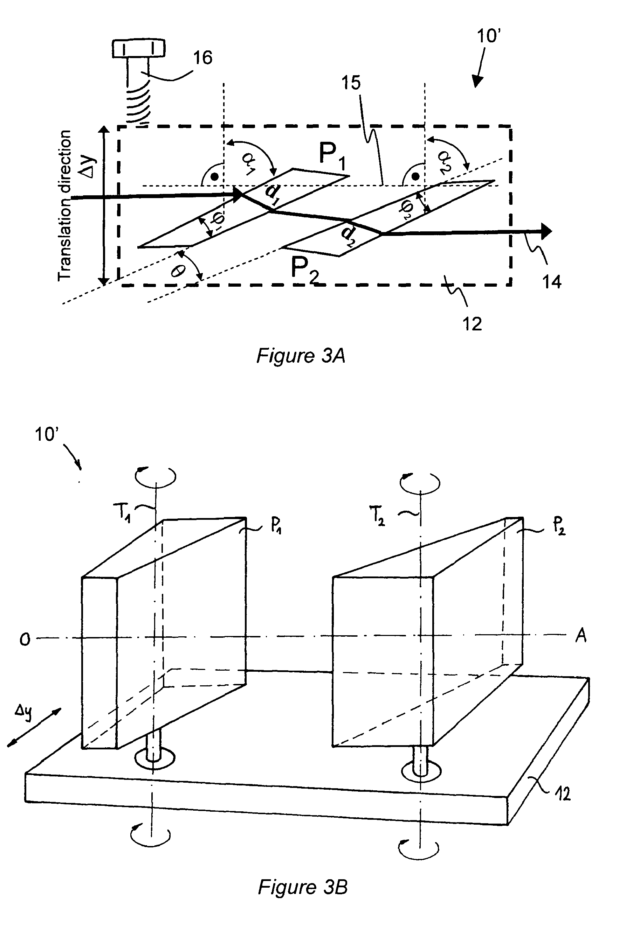

Referring now to Figs. 3A and 3B, a 2-wedge embodiment of the optical assembly 10' according to the present invention used for CEP tuning along with a compensation for the change of dispersion up to the second order is illustrated. Said optical assembly 10' comprises basically a common base plate 12, onto which two slope-surfaced wedges $P_1$ and $P_2$ are mounted in a vibration-proof manner and rotatable around axes $T_1$ and $T_2$ that are parallel with the apices of the wedges and perpendicular to the surface of the base plate 12. The base plate 12 with the two wedges $P_1$ and $P_2$ form a compact unit that can be arranged in the propagation path of the laser beam 14 either inside or outside of the laser resonator for effecting said CEP tuning. As is shown in the figures, the base plate 12 (with the wedges $P_1$ and $P_2$) can be shifted in a direction (shown by the black double arrows) perpendicular to the propagation path 15. Said displacement can be realized again in several ways, as is discussed earlier in connection with the optical assembly 10.

In order to achieve a CEP tuning along with compensating for the change of chirp$_{[o2]}$ of the CEP-tuned laser pulse train up to the second order, wedges $P_1$ and $P_2$ of said optical unit 10' are made of optical materials with different refractive indices $n_1$ and $n_2$, respectively. Furthermore, said wedges $P_1$ and $P_2$ are formed with different apex angles $\varphi_1$ and $\varphi_2$, respectively. Moreover, said wedges $P_1$ and $P_2$ are arranged on the base plate 12 in the propagation path of the light beam 14 at different incident angles $\alpha_1$ and $\alpha_2$, respectively.

The wedges $P_1$ and $P_2$ are aligned such that the thinner portion of one of the wedges is aligned with the thicker portion of the other wedge, and vice versa. The alignment of said wedges $P_1$ and $P_2$ can be characterized by the relative angle $\theta$ of the two wedges $P_1$ and $P_2$, which is here an acute angle, as shown in Fig. 3A. From practical reasons it is preferred that the wedges $P_1$ and $P_2$ shall be placed relatively close to each other. However, in order to ensure rotation of the wedges $P_1$ and $P_2$ independently around the axes $T_1$ and $T_2$, respectively, said wedges $P_1$ and $P_2$ are appropriately spaced apart from one another.

The CEP tuning takes place as discussed above, in particular by shifting the ratio of the distances $d_1$ and $d_2$ the laser beam 14 travels within said wedges $P_1$ and $P_2$, respectively. In this manner practically the changes of dispersion induced by the respective optical materials of said wedges $P_1$ and $P_2$ are varied. Furthermore, when said optical assembly 10' is to be arranged within an already operating laser oscillator of a laser source, said distances $d_1$ and $d_2$ are carefully chosen in view of the optical imaging characteristics of the laser oscillator.

Using pre-determined materials for the wedges $P_1$ and $P_2$, the solution of the above condition (as a set of equations similar to the case discussed above) gives the function of the apex angle $\varphi_1$ of the wedge $P_1$ as the function of the apex angle $\varphi_2$ of the wedge $P_2$. As far as the suitable materials for said wedges $P_1$ and $P_2$ are concerned, among Schott glasses readily available, the one under the catalogue name of N-BK10 ($n_1$=1.4927 with a group index of $n_{g,1}$=$n$ + $\omega$ d$n$/d$\omega$=1.5082 at the wavelength of 800 nm) and the one under the catalogue name of N-PK51 ($n_2$=1.5240 with a group index of $n_{g,2}$=1.5372) were found to provide a nearly ideal combination for the optical assembly 10'. These two glasses exhibit relatively low refractive indices and low group velocity dispersions, which makes them ideal for femtosecond applications. Despite their similar indices, they exhibit strongly varying Abbe numbers, which makes them ideal for the application as the optical assembly 10'. The apex angle $\varphi_2$ of wedge $P_2$ was chosen to be 2.0° for N-PK51, hence the corresponding apex angle $\varphi_1$ of wedge $P_1$ made of N-BK10 is 2.12°.

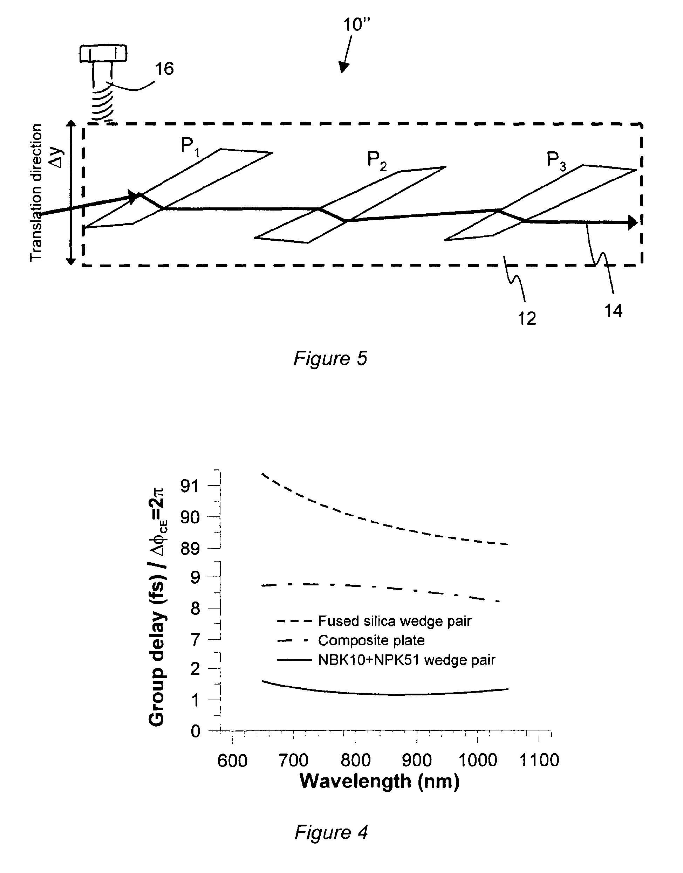

Figure 4 represents the change of spectral GD of a laser pulse passing through various types of CEP adjustment devices, when varying the CEP by $2\pi$. Said laser pulse is generated by a Femtosource Scientific Pro Ti:sapphire laser oscillator operating at a central wavelength of about 800 nm with a repetition rate of 88 MHz. The CEP adjustment devices compared to each other are used in an intracavity mode. The dashed line and the dash-dotted line are calculated for a simple fused silica wedge pair (apex angle 2.76°, see the paper by M.G. Schätzel *et al.*) and for the composite plate of International Publication Pamphlet No. WO 2007/070428 A1, respectively. The solid line refers to the assembly 10' of mixed Schott glasses shown in Figs. 3A and 3B. Figure 4 clearly shows a development of the present optical assembly 10' over the prior art solutions.

In a possible further embodiment of the optical assembly 10', wedge $P_1$ is made of the glass under the catalogue name of KZFS12 with the apex angle $\varphi_1$ of 1.0°, while wedge $P_2$ is manufactured from the glass under the catalogue name of N-BASF2 with an apex angle $\varphi_2$ of 1.0455°.

In a yet possible further embodiment of the optical assembly 10', wedge $P_1$ is made of the glass under the catalogue name of N-LAK9 with the apex angle $\varphi_1$ of 1.0°, while wedge $P_2$ is manufactured from the glass under the catalogue name of N-SSK2 with an apex angle $\varphi_2$ of 1.1054°.

In a yet possible further embodiment of the optical assembly 10', wedge $P_1$ is made of the glass under the catalogue name of N-SSK2 with the apex angle $\varphi_1$ of 1.0°, while wedge $P_2$ is manufactured from the glass under the catalogue name of N-LAK9 with an apex angle $\varphi_2$ of 0.9057°.

In a yet possible further embodiment of the optical assembly 10', wedge $P_1$ is made of the glass under the catalogue name of N-BASF2 with the apex angle $\varphi_1$ of 1.0°, while wedge $P_2$ is manufactured from the glass under the catalogue name of KZFS12 with an apex angle $\varphi_2$ of 0.9267°.

The above examples are for a laser pulse having a central wavelength of about 800 nm. It should be noted that further material properties of the mentioned Schott glasses (refractive indices, group indices, etc.), for various wavelengths as well, can be found in the relevant catalogues. Furthermore, based on the above description, a person skilled in the relevant art can choose further matching materials and apex angles in order to obtain an assembly capable for the CEP tuning along with a simultaneous compensation for the dispersive behaviour of the CEP-tuned laser pulse train up to the second order.

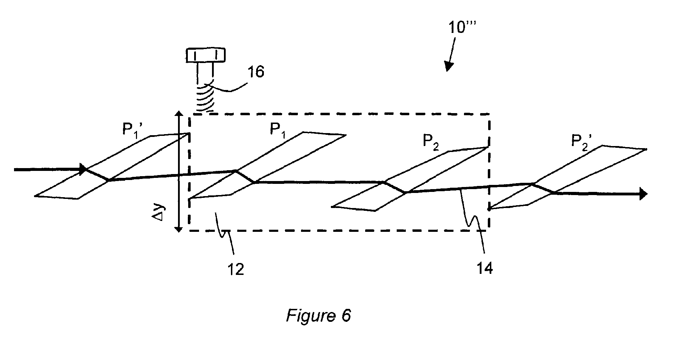

Figures 5 and 6 illustrate two further possible embodiments of the optical assembly of the present invention denoted by 10" and 10"', respectively.

The optical assembly 10" of Figure 5 comprises three wedges $P_1$, $P_2$ and $P_3$ displaced together within the propagation path 15 of the laser beam 14. The wedges $P_1$, $P_2$ and $P_3$ with different apex angles are prepared from different materials. Upon changing position of the wedge trio as a whole in a direction perpendicular to the propagation path 15, a change in the CEP arises, however, both the pulse propagation time (i.e. the repetition rate of the laser oscillator) and the pulse duration is kept unchanged. The physical parameters of the individual wedges $P_1$, $P_2$ and $P_3$ can be determined as discussed earlier in relation to the m-wedge embodiment. The resulting assembly 10" is suitable for achieving a CEP tuning along with a simultaneous compensation for the change of chirp of the CEP-tuned laser pulse train up to the third order along with no lateral beam deviation of the transmitted laser beam 14 relative to the incident one.

The optical assembly 10"' of Figure 6 comprises two pairs of wedges $P_1$, $P_1$' and $P_2$, $P_2$ arranged in the propagation path 15 of the laser beam 14. The pairs of wedges $P_1$, $P_1$ and $P_2$, $P_2$ have different apex angles and are prepared from different materials. However, the wedges of each pair is of the same material and has the same apex angle. Furthermore, said individual wedges are oriented in a counter parallel geometry in each pair and one element of each pair (here the two wedges located in the middle) are mounted rotatably to the common base plate 12. Upon changing position of the two pairs of wedges in a direction perpendicular to the propagation path 15, a change in the CEP arises, however, both the pulse propagation time (i.e. the repetition rate of the laser oscillator) and the pulse duration is kept unchanged. The physical parameters of the individual wedges $P_1$, $P_1$' and $P_2$, $P_2$' can be determined as discussed earlier in relation to the *m*-wedge embodiment. As to the choice of materials, preferably the wedge pair of the 2-wedge embodiments discussed in relation to Figs. 3A and 3B are used here in a doubled configuration. As a result of this configuration, wedges $P_1$ and $P_2$, i.e. the wedges that change their position relative to the remaining wedges as a whole, will also have different apex angles and are made of different Schott glasses. The resulting assembly 10"' is suitable for achieving a CEP tuning along with a simultaneous compensation for the change of chirp of the CEP-tuned laser pulse train up to only the second order along with no lateral beam deviation of the transmitted laser beam 14 relative to the incident one, since the apex angles and the refractive materials of the wedges are pairwise the same. If, however, the assembly 10"' was comprised of four wedges manufactured from different refractive materials and with different apex angles, the change of chirp of the CEP-tuned laser pulse train would be compensated for up to the fourth order.

While only preferred embodiments of the invention are described herein in detail, the invention is not limited thereby. It is believed that the advantages and improved results of the invention will be apparent from the foregoing description. It will also be apparent that various changes and modifications can be made without departing from the spirit and scope of the invention as sought to be defined in the following appended claims. In particular, it is clear for a person skilled in the relevant art that tuning of the CEP of a pulse train along with a simultaneous compensation of the change of dispersive effects up to a preferred order can be equally accomplished by means of an optical assembly, wherein the common base plate is rotated around an axis perpendicular to the surface thereof. In this case, however, instead of e.g. the apex angle of one of the wedges carried by said base plate, the location of the rotation axis around which said base plate can be rotated should be considered when the respective set of equations is "solved". It is also clear that according to our intention a combination of translating and rotating the base plate carrying the wedges also falls into the scope of protection as claimed.

**Claims**

1. An optical assembly for tuning a carrier-envelope phase (CEP) within an optical pulse train propagating along an optical path with a simultaneous compensation for the change of chirp of said pulse train up to an arbitrary order, comprising:

   a plurality of plates (P) positioned in the optical path (15), each plate having first and second surfaces, being rotatable around a respective axis perpendicular to a base plane parallel to the optical path and oriented with its first surface at an angle of incidence ($\alpha$) relative to the optical path, said first and second surfaces of each plate (P) lying in corresponding first and second planes, respectively, intersecting each other along an apex at an apex angle ($\varphi$) therebetween to produce variable thickness in said plates, said thickness measured parallel to the optical path, said apices pointing alternately toward half-spaces located at opposite sides of a plane perpendicular to said base plane, each plate (P) being made of a transparent optical material with a refractive index (n); and

at least a part of the plates (P) is coupled together to form a single unit capable of being displaced as a whole, the plates coupled together are located adjacent to one another along the optical path; and wherein

said apex angles (φ) and angles of incidence (α) are set in accordance with the solutions of the set of equations obtained for the refractive indices (n) fixed by said optical materials, said set of equations being written in the form of

$$\left. \frac{d^{(j)}\varphi(\omega)}{d\omega^{j}} \right|_{\omega=\omega_0} = 0 \quad ;$$

and

$$\left. \frac{d^{(j)}\varepsilon(\omega)}{d\omega^{j}} \right|_{\omega=\omega_0} = 0$$

wherein $j$ is a positive integer ranging from 1 to said arbitrary order, and $\varphi(\omega)$ and $\varepsilon(\omega)$ are the spectral phase and the direction angle of propagation, respectively, of said optical pulses having a central wavelength of $\lambda_0=2\pi/\omega_0$ when propagating through said plates (P).

2. The optical assembly of Claim 1, further comprising a mechanism (16) coupled to the plates forming the single unit to induce a change in the position of said carrier member (12) relative to the optical path.

3. The optical assembly of Claims 1 or 2, wherein in deriving said solutions for setting the apex angles (φ) and angles of incidence (α) of the plates (P) for the refractive indices (n) fixed by the optical materials, an additional condition of $\varepsilon(\omega_0)=0$ is also considered.

4. The optical assembly of Claim 3, wherein the plates (P) having the apex angles (φ) and angles of incidence (α) as set are oriented relative to each other along the optical path to minimize the lateral displacement of the propagation direction of the optical pulse train leaving the last plate relative to that of the optical pulse train striking upon the first plate.

5. The optical assembly of any of Claims 1 to 4, wherein at least the plates forming the single unit are arranged within the laser resonator for generating said optical pulse train.

6. The optical assembly of any of Claims 1 to 4 arranged outside of the laser resonator emitting said optical pulse train.

$\varphi_{CE}$

E(t)

t

pulse
envelope

carrier
wave

*Figure 1*

10

16

Translation direction Δy

14

P₁

$\alpha_1$

$\varphi_1$

$d_1$

P₂

$\alpha_2$

$d_2$

$\varphi_2$

15

$\varphi_i$

P$_i$

$d_i$

$\alpha_i$

$\alpha_m$

$d_m$

$\varphi_m$

P$_m$

12

*Figure 2*

*Figure 3A*

*Figure 3B*

*Figure 5*

*Figure 4*

*Figure 6*

**EUROPEAN SEARCH REPORT**

Application Number

EP 08 46 2009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/136245 A1 (PANG YANG [US]) 26 September 2002 (2002-09-26) | 1,2,5 | INV. H01S3/00 H01S3/106 |
| Y | * paragraphs [0022] - [0033], [0040] - [0042]; figures 1,3 * | 3,4 | ADD. |
| X | US 2002/080477 A1 (SUZUKI MOTOHIKO [JP]) 27 June 2002 (2002-06-27) | 1,2,6 | H01S3/08 H01S3/11 |
| Y | * paragraphs [0029] - [0040]; figure 1 * | 3,4 | |
| X | WO 2008/064710 A (MAX PLANCK GESELLSCHAFT [DE]; VERHOEF AART-JAN [AT]) 5 June 2008 (2008-06-05) | 1,2,6 | |
| Y | * page 11, line 30 - page 14, line 27; figures 3,6 * | 3,4 | |
| D,Y | WO 2007/070428 A (MASSACHUSETTS INST TECHNOLOGY [US]; KAERTNER FRANZ X [US]; ELL RICHARD) 21 June 2007 (2007-06-21) * page 5, line 14 - page 7, line 11; figures 2-4,8 * * page 9, lines 11-27 * | 3,4 | |
| | | | TECHNICAL FIELDS SEARCHED (IPC) |
| A | LEMOFF B E ET AL: "CUBIC-PHASE-FREE DISPERSION COMPENSATION IN SOLID-STATE ULTRASHORT-PULSE LASERS" OPTICS LETTERS, OSA, OPTICAL SOCIETY OF AMERICA, WASHINGTON, DC, US, vol. 18, no. 1, 1 January 1993 (1993-01-01), pages 57-59, XP000328277 ISSN: 0146-9592 * the whole document * | 1,3 | H01S |

The present search report has been drawn up for all claims

| Place of search | Date of completion of the search | Examiner |
|---|---|---|
| Munich | 19 February 2009 | Laenen, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 46 2009

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2009

| Patent document cited in search report | Publication date | Patent family member(s) | Publication date |
|---|---|---|---|
| US 2002136245 A1 | 26-09-2002 | WO 02082118 A2 | 17-10-2002 |
| US 2002080477 A1 | 27-06-2002 | JP 2002107635 A | 10-04-2002 |
| WO 2008064710 A | 05-06-2008 | NONE | |
| WO 2007070428 A | 21-06-2007 | NONE | |

EPO FORM P0459

For more details about this annex : see Official Journal of the European Patent Office, No. 12/82

## REFERENCES CITED IN THE DESCRIPTION

**Patent documents cited in the description**

- WO 2007070428 A1

**Non-patent literature cited in the description**

- **M.G. Schätzel et al.** *Appl. Phys.,* 2004, vol. B79, 1021-1025